# EUROPÄISCHE PATENTSCHRIFT

(11) **EP 0 701 068 B1**
(45) Veröffentlichungstag und Bekanntmachung des Hinweises auf die Patenterteilung: **05.07.2000**
(21) Anmeldenummer: 95101322.6
(22) Anmeldetag: 01.02.1995
(51) Int. Cl.: F16B 19/00, E04F 13/08

(54) **Isolierdorn-Dübel**
Insulation anchor dowell
Cheville d'ancre d'isolation

(30) Priorität: 09.09.1994 DE 4432201
(43) Veröffentlichungstag der Anmeldung: 13.03.1996
(73) Patentinhaber: TOGE-Dübel A. Gerhard KG, 90431 Nürnberg (DE)
(72) Erfinder: Gerhard, Anton, D-90431 Nürnberg (DE)
(74) Vertreter: Rau, Manfred, Dr. Dipl.-Ing.

(56) Entgegenhaltungen:
- EP-A- 0 215 675
- DE-A- 3 212 160
- DE-A- 3 340 750
- FR-A- 2 172 512
- US-A- 2 972 275

## Beschreibung

Die Erfindung betrifft einen Isolierdorn-Dübel nach dem Oberbegriff des Patentanspruches.

Derartige aus der DE-A-33 40 750 bekannte Isolierdorn-Dübel weisen eine elastische zusammendrückbare Spreizhülse auf, an deren einem Ende ein ringförmiger Halteteller angebracht ist. Die Spreizhülse ist aus einem Blechzuschnitt gebogen. Sie weist über den größten Teil ihres Umfangs einen teil-kreiszylindrischen Querschnitt auf. Im Bereich ihrer Längskanten ist sie mit nach innen gerichteten Stegen versehen, die sich durch den Innenraum der Spreizhülse fast bis zu deren Innenwand erstrecken. Derartige Isolierdorn-Dübel weren zur Befestigung von Isolierplatten an Hauswänden und dergleichen verwendet. Hierbei wird die Isolierplatte gegen die Mauer gedrückt und dann ein Bohrloch durch die Platte in die Mauer gesetzt. Das freie Ende des verjüngten Abschnittes an der Spreizhülse hat gegenüber dem kleinstmöglichen Bohrloch-Durchmesser leichtes Untermaß, während der im wesentlichen zylindrische Abschnitt der Spreizhülse gegenüber dem größtmöglichen Bohrloch-Durchmesser leichtes Übermaß hat. Der Isolierdorn-Dübel wird durch das Loch in der Isolierplatte in das Bohrloch in der Mauer eingetrieben, und zwar in der Regel mit leichten Hammerschlägen. Hierbei wird der im wesentlichen teil-kreiszylindrische Abschnitt der Spreizhülse leicht zusammengedrückt und verspannt sich elastisch im Bohrloch. Die nach innen gezogenen Stege stützen sich bei radialer Verformung an der Innenwand der Spreizhülse ab, wodurch die Knickfestigkeit der Hülse vergrößert wird. Diese Isolierdorn-Dübel haben sich zum Einsatz in Betonwänden außerordentlich bewährt; in Bohrungen in Gitterziegeln halten sie nicht zuverlässig. Bohrungen in Gitterziegeln weisen sehr stark schwankende Durchmesser auf. Um auch in Bohrungen in Gitterziegeln die bekannte Isolierdorn-Dübel zuverlässig zu befestigen, ist bereits versucht worden, in Isolierdorn-Dübeln, deren nach innen gezogenen Stege eine geringere radiale Erstrekkung aufwiesen, einen Stift einzutreiben, mit dem die Spreizhülse aufgeweitet werden kann. Dies erfordert den zusätzlichen Aufwand für einen Spreizstift und den Aufwand für das Eintreiben dieses Spreizstiftes in die Spreizhülse.

Aus der EP-A-0 215 675 ist ein Federstift bekannt, der eine um die Achse des Stiftes gewickelte Blattfeder aufweist, die eine mittels eines Absatzes nach innen abgesetzte Zunge aufweist, die wiederum eine zugeordnete Längskante des Federstiftes untergreift.

Der Erfindung liegt die Aufgabe zugrunde, einen Isolierdorn-Dübel der gattungsgemäßen Art so auszugestalten, daß er ohne zusätzlichen Aufwand auch in Bohrungen in Gitterziegeln befestigt werden kann.

Diese Aufgabe wird erfindungsgemäß durch die Merkmale im Kennzeichnungsteil des Patentanspruches gelöst.

Beim Eintreiben der Spreizhülse in das Bohrloch schiebt sich der Bereich der Spreizhülse, dessen Längskante den geringeren radialen Abstand zur Mittel-Längs-Achse hat, unter den der anderen Längskante zugeordneten Bereich. Damit ist eine Anpassung an große Unterschiede in den Durchmessern der Bohrlöcher möglich. Bei allen Bohrlochdurchmessern tritt eine zuverlässige Festlegung der Spreizhülse im Bohrloch ein.

Nachfolgend wird ein Ausführungsbeispiel der Erfindung anhand der Zeichnung erläutert. Es zeigt:
- Fig. 1: einen Isolierdorn-Dübel in perspektivischer Darstellung und
- Fig. 2: einen Querschnitt durch den Isolierdorn-Dübel in in ein Bohrloch eingesetztem Zustand.

Der in der Zeichnung dargestellte Isolierdom-Dübel 1 besteht aus Metallblech. Er besteht im wesentlichen aus einer Spreizhülse 2 und einem an deren einem Ende befestigten Halteteil 3. Die Spreizhülse 2 ist mit einem über ihre volle Länge durchgehenden, parallel zur Mittel-Längs-Achse 4 verlaufenden Schlitz 5 versehen. Die Spreizhülse 2 weist einen sich vom Halteteller 3 über einen wesentlichen Teil ihrer Länge erstreckenden Abschnitt 6 auf, der einen im wesentlichen kreiszylindrischen Querschnitt hat. An dem dem Halteteller 3 entgegengesetzten Ende schließt sich an den Abschnitt 6 ein sich verjüngender Abschnitt 7 an.

Der Durchmesser a des freien Endes 8 des verjüngten Abschnitts 7 ist kleiner als der kleinstmögliche Durchmesser b eines Bohrlochs 9 im Mauerwerk 10 und zwar insbesondere im Mauerwerk 10 aus Gitterziegeln. Der Durchmesser c der Spreizhülse 2 in unverformtem Zustand ist größer als der größtmögliche Durchmesser b eines Bohrlochs 9. Wenn von einem kleinstmöglichen bzw. größtmöglichen Durchmesser eines Bohrlochs 9 gesprochen wird, dann bezieht sich dies auf den Nenndurchmesser eines Bohrlochs 9, der durch den Nenndurchmesser eines Bohrers bestimmt wird. Je weicher das Material des Mauerwerks 10 ist, um so größer kann das Bohrloch 9 werden, das mit einem vorgegebenen Bohrer gebohrt wird. Andererseits kann der Durchmesser b des Bohrlochs 9 sich auch durch Bohrerverschleiß ändern. Wenn beispielsweise ein Bohrloch 9 mit einem Nenndurchmesser von 8 mm gebohrt wird, dann kann ihr tatsächlicher Durchmesser b bei Beton im Bereich von 8,1 bis 8,3 mm liegen. Wenn der Durchmesser des Bohrers durch Verschleiß weiter abnimmt, wird er in der Regel ausgewechselt. Bei Mauerwerk 10 aus Gitterziegeln wird für den Einsatz eines gleichartigen Isolierdorn-Dübels 1 ein Bohrer mit einem Nenndurchmesser von 6 mm eingesetzt. Der tatsächliche Durchmesser b des Bohrlochs 9 im Mauerwerk 10 liegt dann zwischen 7 und 8 mm und zwar in der Regel eher bei 7 mm.

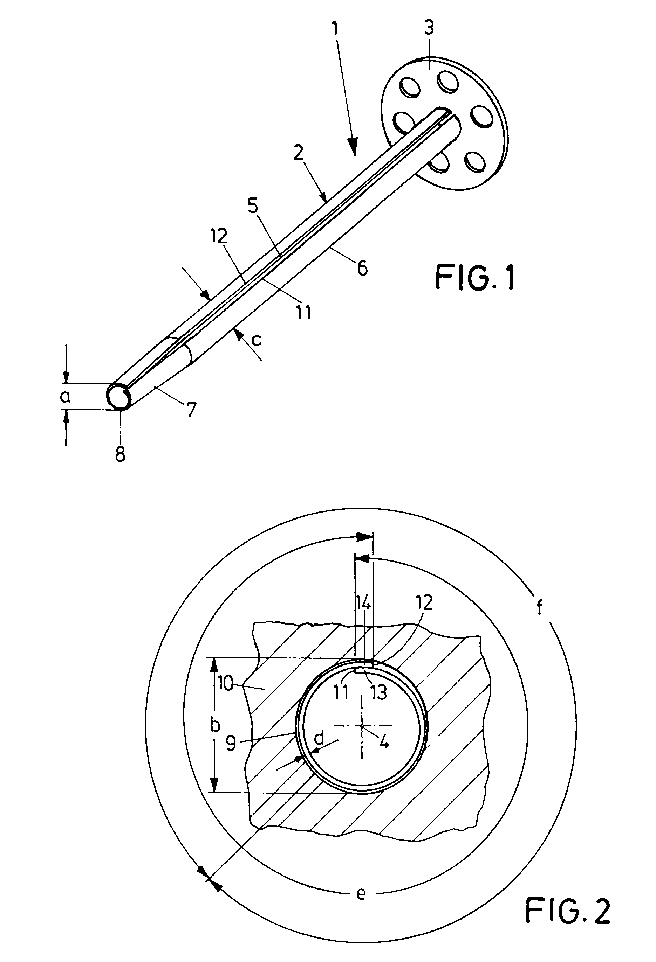

Wie Fig. 1 entnehmbar ist, sind die beiden den Schlitz 5 begrenzenden Längskanten 11, 12 radial zur Achse 4 gegeneinander versetzt, wobei die Längskante 11 etwa um die Wanddicke d der Spreizhülse 2 zur Achse 4 hin versetzt ist. Der Umfang e der Spreizhülse 2 von Längskante 11 zu Längskante 12 im Abschnitt 6 entspricht der Breite des Blechzuschnittes, aus dem die Spreizhülse 2 gebogen wird. Dieser Umfang e ist größer als der Umfang f des Bohrlochs 9 mit dem größten Durchmesser. Damit ist sichergestellt, daß die den Längskanten 11, 12 benachbarten Bereiche 13, 14 sich beim Eintreiben der Spreizhülse 2 in ein Bohrloch 9 untereinander schieben, wie es in Fig. 2 dargestellt ist. Bei Einsatz in Bohrlöcher 9 in Mauerwerk 10 aus Gitterziegeln werden also entsprechend den obigen Darlegungen die den Längskanten 11, 12 benachbarten Bereiche 13, 14 beim Eintreiben der Spreizhülse 2 in das Bohrloch 9 stärker untereinandergeschoben als beim Einsatz in Bohrlöcher 9 in Beton. Eine zufriedenstellende Befestigung in das Bohrloch 9 ist also in jedem Einsatzfall sichergestellt. Im übrigen hat sich überraschenderweise gezeigt, daß der beschriebene Isolierdorn-Dübel 1 in Gasbeton bzw. Porenbeton, der eine verhältnismäßig homogene weiche Konsistenz hat, und beispielsweise mit einer normalen Säge geschnitten werden kann, ohne vorheriges Bohren eines Bohrlochs eingeschlagen werden kann.

## Patentansprüche

1. Isolierdorn-Dübel zur Befestigung von Isolierplatten an Hauswänden oder dergleichen
- mit einer aus einem Metall-Blechzuschnitt absatzfrei gebogenen Spreizhülse (2), die einen durchgehenden, durch Längskanten (11, 12) begrenzten Schlitz (5) und einen im wesentlichen kreiszylindrischen Abschnitt (6) und einen verjüngten Abschnitt (7) mit einem freien Ende (8) aufweist, wobei der im wesentlichen kreiszylindrische Abschnitt (6) gegenüber dem größtmöglichen Durchmesser eines Bohrlochs (9) leichtes Übermaß hat und wobei das freie Ende (8) des verjüngten Abschnitts (7) gegenüber dem kleinstmöglichen Durchmesser des Bohrlochs (9) leichtes Untermaß hat, und
- mit einem Halteteller (3), der an dem dem verjüngten Abschnitt (7) abgewandten Ende der Spreizhülse (2) befestigt ist,
**dadurch gekennzeichnet**,
**daß** die den Schlitz (5) begrenzenden Längskanten (11, 12) radial zur Mittel-Längs-Achse (4) der Spreizhülse (2) versetzt ausgebildet sind, wobei sie mindestens im Bereich des im wesentlichen kreiszylindrischen Abschnitts (6) radial zur Mittel-Längs-Achse (4) der Spreizhülse (2) um die Wanddikke (d) der Spreizhülse (2) gegeneinander versetzt ausgebildet sind, und daß der der Breite des Blechzuschnittes entsprechende Umfang (e) des im wesentlichen kreiszylindrischen Abschnitts (6) der Spreizhülse (2) von Längskante (11) zu Längskante (12) größer ist, als der maximale Umfang (f) des Bohrlochs (9).

## Claims

1. Insulation anchor dowel for mounting insulating slabs on house walls or the like, comprising
- an expanding sleeve (2), which is bent without any shoulders from a sheet metal blank and has a continuous slit (5) defined by lengthwise edges (11, 12), and a substantially circular cylindrical section (6) and a tapered section (7) with a free end (8), the substantially circular cylindrical section (6) being slightly oversize as compared to the greatest possible diameter of a drilled hole, and the free end (8) of the tapered section (7) being slightly undersize as compared to the smallest possible diameter of the drilled hole (9); and
- a retaining plate (3), which is mounted on the end of the expanding sleeve (2) that is turned towards the tapered section (7),
**characterized**
**in that** the lengthwise edges (11, 12), which define the slit (5), are formed for displacement radial to the central longitudinal axis (4) of the expanding sleeve (2), they being displaced relative to each other by the wall thickness (d) of the expanding sleeve (2) at least in the area of the substantially circular cylindrical section (6) radially to the central longitudinal axis (4) of the expanding sleeve (2); and
in that the circumference (e), corresponding to the width of the sheet blank, of the substantially circular cylindrical section (6) of the expanding sleeve (2), from lengthwise edge (11) to lengthwise edge (12), is greater than the maximum circumference (f) of the drilled hole (9).

## Revendications

1. Cheville isolante d'ancrage isolante destinée à la fixation de plaques d'isolation sur des murs de bâtiments, ou similaires, comprenant :
- une douille à écartement (2) dépourvue de talon, cintrée à partir d'un flan de tôle métallique, qui présente une fente (5) traversante délimitée par des arêtes longitudinales (11, 12), et comporte un tronçon (6) essentiellement cylindrique et un tronçon en rétrécissement (7) avec une extrémité libre (8), ledit tronçon essentiellement cylindrique (6) présentant une dimension légèrement supérieure au plus grand diamètre possible d'un perçage (9), et l'extrémité libre (8) du tronçon en rétrécissement (7) présentant une dimension légèrement inférieure au plus petit diamètre possible du perçage (9), et
- une plaquette de maintien (3), fixée à l'extrémité de la douille à écartement (2) opposée au tronçon en rétrécissement (7),
caractérisée en ce que
les arêtes longitudinales (11, 12) qui délimitent la fente (5) sont réalisées en décalage radial par rapport à l'axe longitudinal médian (4) de la douille à écartement (2), ces arêtes étant réalisées avec un décalage radial l'une par rapport à l'autre vis-à-vis de l'axe longitudinal médian (4) de la douille à écartement (2) d'une valeur correspondant à l'épaisseur de paroi (d) de la douille à écartement (2) au moins dans la région du tronçon essentiellement cylindrique (6), et en ce que le périmètre (e), correspondant à la largeur du flan de tôle, du tronçon (6) essentiellement cylindrique de la douille à écartement (2) d'une arête longitudinale (11) jusqu'à l'autre arête longitudinale (12) est supérieur au périmètre maximum (f) du perçage (9).
